# EUROPÄISCHE PATENTSCHRIFT

(11) **EP 3 347 239 B1**
(45) Veröffentlichungstag und Bekanntmachung des Hinweises auf die Patenterteilung: **11.11.2020**
(21) Anmeldenummer: 16741288.1
(22) Anmeldetag: 15.07.2016
(51) Int. Cl.: B60R 1/00, G02B 27/01

(54) **VERFAHREN UND VORRICHTUNG ZUM DARSTELLEN EINES FAHRZEUGUMFELDES EINES FAHRZEUGES**
METHOD AND DEVICE FOR CREATING A VEHICLE ENVIRONMENT OF A VEHICLE
PROCEDE ET DISPOSITIF POUR CRÉER UN ENVIRONNEMENT DE VÉHICULE D'UN VÉHICULE

(30) Priorität: 10.09.2015 DE 102015217258
(43) Veröffentlichungstag der Anmeldung: 18.07.2018
(73) Patentinhaber: Robert Bosch GmbH, 70442 Stuttgart (DE)
(72) Erfinder: CANO, Raphael, 70180 Stuttgart (DE); ESPARZA GARCIA, Jose Domingo, 70178 Stuttgart (DE)
(86) Internationale Anmeldenummer: PCT/EP2016/066865
(87) Internationale Veröffentlichungsnummer: WO 2017/041940

(56) Entgegenhaltungen:
- EP-A1- 2 163 430

## Beschreibung

### Stand der Technik

Die vorliegende Erfindung betrifft ein Verfahren und eine Vorrichtung zum Darstellen eines Fahrzeugumfeldes eines Fahrzeuges.

Die vorliegende Erfindung betrifft dabei insbesondere sogenannte Surround-View-Systeme. In solchen Surround-View-Systemen wird eine Darstellung des Fahrzeugumfeldes aus mehreren Ansichten des Fahrzeugumfeldes zusammengesetzt. In solchen Systemen sind üblicherweise Kameras derart angeordnet, dass diese eine 360°-Ansicht um das Fahrzeug herum ermöglichen. Das Umfeld des Fahrzeuges wird durch die Kameras erfasst und die Bilder der Kameras auf eine virtuelle Projektionsfläche übertragen, welche typischerweise die Form einer Schüssel aufweist. Um die Kamerabilder auf die virtuelle Projektionsfläche zu übertragen, wird zumeist auf eine intrinsische oder extrinsische Kamerakalibrierung zurückgegriffen, um ein Bildmapping zu ermöglichen.

Die EP2163430A1 offenbart eine Vorrichtung zur Darstellung eines Fahrzeugumfeldes gemäß dem Oberbegriff des Anspruches 1.

### Offenbarung der Erfindung

Das erfindungsgemäße Verfahren zum Darstellen eines Fahrzeugumfeldes eines Fahrzeuges umfasst ein Erfassen eines Teilbereiches des Fahrzeugumfeldes in zumindest einem Kamerabild, ein Bereitstellen einer virtuellen Projektionsfläche in einem virtuellen Raum, welcher die tatsächliche Fahrzeugumgebung repräsentiert, ein Übertragen des zumindest einen Kamerabildes auf einen ersten Bereich der virtuellen Projektionsfläche, wobei das zumindest eine Kamerabild entsprechend einer Lage des darin abgebildeten Fahrzeugumfeldes auf der virtuellen Projektionsfläche angeordnet wird, ein Übertragen einer rechnerisch erzeugten und/oder vorab gespeicherten zusätzlichen Bildinformation auf einen zweiten Bereich der virtuellen Projektionsfläche und ein Darstellen des Fahrzeugumfeldes aus Sicht einer virtuellen Kamera, die in dem virtuellen Raum angeordnet ist, wobei dass sich der zweite Bereich entlang einer Hochachse des Fahrzeuges oberhalb des ersten Bereiches erstreckt, und die zusätzliche Bildinformation einen Himmel darstellt. Auf diese Weise wird es ermöglicht, neben den in Kamerabildern erfassten Informationen noch weitere Informationen darzustellen. Durch diese zusätzlichen Informationen können beispielsweise einem Fahrer des Fahrzeuges Informationen bereitgestellt werden ohne dass dieser seinen Blick von der Darstellung wenden muss. Auch wird die Darstellung des Fahrzeugumfeldes visuell verbessert, da solche Bereiche, für die keine Kamerabilder zur Darstellung zur Verfügung stehen gefüllt werden.

Die Unteransprüche zeigen bevorzugte Weiterbildungen der Erfindung.

Es ist vorteilhaft, wenn die virtuelle Projektionsfläche eine Position des Fahrzeuges in dem virtuellen Raum vollständig umschließt. Dabei ist die virtuelle Projektionsfläche insbesondere in Form einer Kugel ausgeführt. Damit wird es ermöglicht, dass die virtuelle Kamera in dem virtuellen Raum beliebig ausgerichtet werden kann und bei jeder Ausrichtung ein vollständiges Bild der virtuellen Kamera errechnet werden kann.

Auch ist es vorteilhaft, wenn sich der zweite Bereich entlang einer Hochachse des Fahrzeuges oberhalb des ersten Bereiches erstreckt. Ein solcher Bereich wird oftmals nicht von Kameras erfasst, da in einem solchen Bereich kaum eine Annäherung von Objekten an das Fahrzeug erfolgt. Somit wird es ermöglicht, auch einen Bereich über dem Fahrzeug darzustellen, welcher nicht von einer Kamera erfasst wird. Dabei ist einen Himmel als zusätzliche Bildinformation darstellt. Somit wird in dem zweiten Bereich eine Bildinformation dargestellt, die sich mit hoher Wahrscheinlichkeit mit einem tatsächlich an dieser Stelle sichtbaren Fahrzeugumfeld des Fahrzeuges deckt.

Auch ist es vorteilhaft, wenn die zusätzliche Bildinformation entsprechend einer aktuellen Tageszeit und/oder einem aktuellen Datum gewählt wird. Auf diese Weise kann die zusätzliche Bildinformation derart gewählt werden, dass diese sich möglichst genau mit den tatsächlichen Begebenheiten im Umfeld des Fahrzeuges deckt. So kann beispielsweise eine Helligkeit der Bildinformation oder eine Erscheinung eines durch die zusätzliche Bildinformation dargestellten Himmels entsprechend angepasst werden.

Ebenso vorteilhaft ist es, wenn die zusätzliche Bildinformation entsprechend einer Position des Fahrzeuges gewählt wird. Auf diese Weise kann die zusätzliche Bildinformation derart gewählt werden, dass diese sich möglichst genau mit den tatsächlichen Begebenheiten im Umfeld des Fahrzeuges deckt. So kann dem Fahrer beispielsweise ortsspezifische Information, wie z.B. ein Wetterbericht oder eine Verkehrsinformation, bereitgestellt werden oder eine Erscheinung eines durch die zusätzliche Bildinformation dargestellten Himmels entsprechend einer Position des Fahrzeuges angepasst werden.

Auch ist es vorteilhaft, wenn die zusätzliche Bildinformation entsprechend einer aktuellen Wetterlage gewählt wird. Auf diese Weise kann die zusätzliche Bildinformation derart gewählt werden, dass diese sich möglichst genau mit den tatsächlichen Begebenheiten im Umfeld des Fahrzeuges deckt. So können beispielsweise in einem durch die zusätzliche Bildinformation dargestellten Himmels der Wetterlage entsprechende Wolken dargestellt werden.

Ferner ist es vorteilhaft, wenn die zusätzliche Bildinformation entsprechend aktueller Lichtverhältnisse gewählt wird. Insbesondere werden die aktuellen Lichtverhältnisse mittels eines Lichtsensors des Fahrzeuges erfasst. Somit wird u.a. vermieden, dass ein Anwender, insbesondere ein Fahrer des Fahrzeuges, beim Betrachten der Darstellung des Fahrzeugumfeldes geblendet wird. Des Weiteren kann eine Erscheinung der durch die zusätzliche Bildinformation dargestellten Elemente an die Lichtverhältnisse angepasst werden. So könnte beispielsweise ein Himmel heller oder dunkler dargestellt werden.

Des Weiteren ist es vorteilhaft, wenn die zusätzliche Bildinformation Informationen über eine aktuelle oder zukünftige Wetterlage umfasst. Somit wird dem Fahrer eine Information, die für ein Führen des Fahrzeuges relevant ist, auf intuitive Weise bereitgestellt.

Auch ist es vorteilhaft, wenn die zusätzliche Bildinformation ein Textelement oder Symbol umfasst. Insbesondere beschreibt das Textelement oder das Symbol eine zukünftige Wetterlage. Auf diese Weise wird dem Fahrer eine Information auf besonders schnell ersichtliche Weise übermittelt.

Ebenfalls vorteilhaft ist eine Vorrichtung zum Darstellen eines Fahrzeugumfeldes eines Fahrzeuges, welche dazu eingerichtet ist, das erfindungsgemäße Verfahren auszuführen. Eine solche Vorrichtung weist alle Vorteile des erfindungsgemäßen Verfahrens auf.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine Draufsicht auf ein Fahrzeug mit einer beispielhaften erfindungsgemäßen Vorrichtung in einer ersten Ausführungsform,
- Figur 2: eine Darstellung eines virtuellen Raumes gemäß der ersten Ausführungsform der Erfindung, und
- Figur 3: eine beispielhafte Darstellung eines Fahrzeugumfeldes eines Fahrzeuges gemäß der ersten Ausführungsform der Erfindung.

### Ausführungsformen der Erfindung

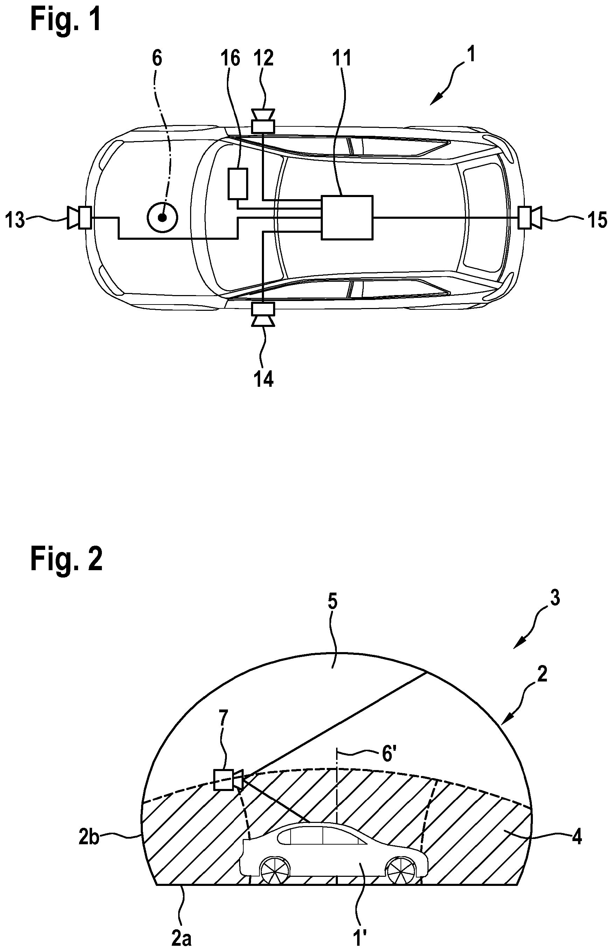

Figur 1 zeigt ein Fahrzeug 1 mit einer erfindungsgemäßen Vorrichtung 11 zum Darstellen eines Fahrzeugumfeldes des Fahrzeuges 1 gemäß einer ersten Ausführungsform der Erfindung. An dem Fahrzeug 1 sind eine erste Kamera 12, eine zweite Kamera 13, eine dritte Kamera 14 und eine vierte Kamera 15 angeordnet.

Die erste Kamera 12 ist an einem rechten Außenspiegel des Fahrzeuges 1 angeordnet und erfasst einen Bereich, welcher rechts neben dem Fahrzeug 1 liegt. Die zweite Kamera 13 ist an einer Front des Fahrzeuges 1 angeordnet und erfasst einen Bereich, welcher vor dem Fahrzeug 1 liegt. Die dritte Kamera 14 ist an einem linken Außenspiegel des Fahrzeuges 1 angeordnet und erfasst einen Bereich, welcher links neben dem Fahrzeug 1 liegt. Die vierte Kamera 15 ist an einem Heck des Fahrzeuges 1 angeordnet und erfasst einen Bereich, welcher hinter dem Fahrzeug 1 angeordnet ist. Jede der ersten bis vierten Kamera 12 bis 15 ist über jeweils eine Datenleitung mit der Vorrichtung 11 zum Darstellen des Fahrzeugumfeldes des Fahrzeuges 1 verbunden. Die Vorrichtung 11 wird aus einer Recheneinheit gebildet, welche zum Ausführen einer Bildverarbeitung geeignet ist, und entsprechende Schnittstellen für die erste bis vierte Kamera 12 bis 15 aufweist.

Durch die Vorrichtung 11 wird das erfindungsgemäße Verfahren in einer ersten Ausführungsform ausgeführt. Das Verfahren wird bei einer Inbetriebnahme der Vorrichtung 11, bspw. bei einem Drehen des Zündschlüssels des Fahrzeuges 1 gestartet.

Nach einem Starten des Verfahrens wird zunächst ein erster Schritt S1 ausgeführt. In dem ersten Schritt erfolgt ein Erfassen eines Teilbereiches des Fahrzeugumfeldes in zumindest einem Kamerabild. Dazu wird von jeder der ersten bis vierten Kamera 12 bis 15 jeweils ein Bild erfasst und an die Vorrichtung 11 übertragen. Bei der mit Hinblick auf Figur 1 beschriebenen Anordnung der ersten bis vierten Kamera 12 bis 15 wird nicht das gesamte Fahrzeugumfeld des Fahrzeuges 1 erfasst. So werden bspw. Bereiche, welche direkt über dem Fahrzeug 1 liegen, nicht von einer der Kameras 12 bis 15 erfasst. Somit wird nur ein Teilbereich des Fahrzeugumfeldes erfasst. Nach dem ersten Schritt des Verfahrens wird ein zweiter Schritt des Verfahrens ausgeführt.

In dem zweiten Schritt erfolgt ein Bereitstellen einer virtuellen Projektionsfläche 2 in einem virtuellen Raum 3, welcher die tatsächliche Fahrzeugumgebung repräsentiert. Der virtuelle Raum ist kein tatsächlicher Raum, sondern lediglich eine mathematische Darstellung eines Raums, welche durch die Vorrichtung 11 errechnet wird.

Eine grafische Darstellung des virtuellen Raumes ist in Figur 2 gezeigt. Der virtuelle Raum 3 repräsentiert die tatsächliche Fahrzeugumgebung. Somit kann jedem Objekt in der Fahrzeugumgebung eine Position in dem virtuellen Raum 3 zugeordnet werden. Dies gilt auch für das Fahrzeug 1. An der Position in dem virtuellen Raum, welcher einer Lage des Fahrzeuges 1 in dem tatsächlichen Raum entspricht, ist ein Modell 1' des Fahrzeuges 1 angeordnet. Das Modell 1' und somit die Position des Fahrzeuges 1 wird von der Projektionsfläche in den virtuellen Raum 3 vollständig umschlossen. Die virtuelle Projektionsfläche 2 weist eine ebene Grundfläche 2a auf, welche sich in dem virtuellen Raum entsprechend einer Fahrbahnoberfläche erstreckt, auf welcher sich das Fahrzeug 1 befindet. Die virtuelle Projektionsfläche 2 weist ferner einen kugelförmigen Abschnitt 2b auf, welcher die Form einer Kugel aufweist, von der jedoch ein Anteil von der ebenen Grundfläche 2a abgeschnitten wird. Der kugelförmige Anteil 2b der Projektionsfläche 2 umläuft das Modell 1' des Fahrzeuges 1 in dessen Seitenbereichen und in einem Bereich, welcher über dem Modell 1' des Fahrzeuges 1 liegt. Somit ist das Modell 1' vollständig von der virtuellen Projektionsfläche 2 umschlossen.

Nach dem zweiten Schritt S2 wird ein dritter Schritt S3 ausgeführt. In dem dritten Schritt S3 erfolgt ein Übertragen der Kamerabilder der ersten bis vierten Kamera 12 bis 15 auf einen ersten Bereich der virtuellen Projektionsfläche 2, wobei die Kamerabilder entsprechend einer Lage des darin abgebildeten Fahrzeugumfeldes auf der virtuellen Projektionsfläche 2 angeordnet werden. Die Kamerabilder werden somit als eine Textur auf die virtuelle Projektionsfläche 2 übertragen. So wird ein vorderes Kamerabild, welches von der zweiten Kamera 13 erfasst wurde, auf einem Bereich der virtuellen Projektionsfläche 2 angeordnet, welcher vor dem Modell 1' des Fahrzeuges 1 liegt. Entsprechend werden die Kamerabilder der ersten und dritten Kamera 12 und 13 auf Bereichen der virtuellen Projektionsfläche 2 angeordnet, welche neben dem Modell 1' liegen, und ein Kamerabild der vierten Kamera 15 wird in einem Bereich der virtuellen Projektionsfläche 2 angeordnet, welcher hinter dem Modell 1' des Fahrzeuges 1 liegt. Dabei ist es insbesondere vorteilhaft, wenn ein Koordinatenmapping erfolgt, durch welches die in den Kamerabildern dargestellten Objekte derart verzerrt oder entzerrt werden, dass eine Verzerrung der Kamerabilder, die sich aus einer Form der virtuellen Projektionsfläche 2 ergibt, ausgeglichen wird.

Die Bereiche der virtuellen Projektionsfläche 2, auf welchen ein Kamerabild angeordnet wurde, werden zusammen als der erste Bereich 4 bezeichnet. Der erste Bereich 4 bildet also den erfassten Teilbereich des Fahrzeugumfeldes ab. Mit Hinblick auf Figur 2 ist es ersichtlich, dass oberhalb des Modelles 1' des Fahrzeuges 1 ein Anteil der virtuellen Projektionsfläche 2 liegt, in welchem kein Kamerabild angeordnet ist, da dieser Bereich des tatsächlichen Fahrzeugumfeldes in keinem Kamerabild erfasst wurde. Dies ist in dieser ersten Ausführungsform darin begründet, dass keine der ersten bis vierten Kameras 12 bis 15 nach oben gerichtet ist. Dieser Bereich der virtuellen Projektionsfläche 2, in dem keines der Kamerabilder der ersten bis vierten Kamera 12 bis 15 angeordnet ist, wird als ein zweiter Bereich 5 der virtuellen Projektionsfläche 2 bezeichnet. In der hier beschriebenen ersten Ausführungsform erstreckt sich der zweite Bereich 5 entlang einer Hochachse 6 des Fahrzeuges 1 oberhalb des ersten Bereiches 4. In den virtuellen Raum 3 übertragen bedeutet dies, dass sich der zweite Bereich 5 entlang einer virtuellen Hochachse 6', welche der Hochachse 6 in der tatsächlichen Fahrzeugumgebung entspricht, und oberhalb des Modells 1' des Fahrzeuges 1 erstreckt.

Nach dem dritten Schritt S3 wird ein vierter Schritt S4 ausgeführt. In dem vierten Schritt S4 erfolgt ein Übertragen einer rechnerisch erzeugten und/oder vorab gespeicherten zusätzlichen Bildinformation auf den zweiten Bereich 5 der virtuellen Projektionsfläche 2. Die zusätzliche Bildinformation definiert also eine Textur für den zweiten Bereich 5. Im Folgenden werden einige Beispiele für eine rechnerisch erzeugte zusätzliche Bildinformation sowie Beispiele für vorab gespeicherte zusätzliche Bildinformationen beschrieben. Es ist ersichtlich, dass alle beschriebenen Beispiele in beliebiger Form kombiniert werden können. Die zusätzliche Bildinformation stellt einen Himmel dar. Dabei kann die Darstellung des Himmels entweder aus vorab gespeicherten Abbildungen eines tatsächlichen Himmels erzeugt werden oder ein computeranimierter Himmel wird rechnerisch erzeugt. Dieser künstliche Himmel wird als zusätzliche Bildinformation in dem zweiten Bereich 5 der virtuellen Projektionsfläche 2 abgebildet. Anstelle des tatsächlichen Himmels, welcher sich über dem Fahrzeug 1 befindet, wird somit in der Darstellung des Fahrzeugumfeldes ein künstlicher Himmel abgebildet. Somit wird der Eindruck einer vollständigen Rundumsicht ermöglicht, ohne dass der Bereich über dem Fahrzeug 1 von einer Kamera erfasst werden muss.

Da die Ansicht eines Himmels von unterschiedlichen Faktoren abhängig ist, ist es vorteilhaft, diese Faktoren bei dem Erzeugen des künstlichen Himmels einzubeziehen.

So kann die zusätzliche Bildinformation entsprechend einer aktuellen Tageszeit und/oder einem aktuellen Datum gewählt werden. Entsprechend der Tageszeit kann ein Himmel bei Tageszeit oder ein Nachthimmel dargestellt werden. Abhängig von dem aktuellen Datum kann gewählt werden, zu welcher Tageszeit ein Übergang zwischen dem Himmel bei Tageszeit und dem Nachthimmel ausgeführt wird.

Ferner kann die zusätzliche Bildinformation entsprechend einer Position des Fahrzeuges gewählt werden. Die Position des Fahrzeuges wird beispielsweise über einen GPS-Sensor eines Navigationssystems bereitgestellt. Auf diese Weise wird bspw. zunächst die Zeit eines Sonnenunterganges ermittelt, wonach ein Sonnenuntergang über die zusätzliche Bildinformation auf der virtuellen Projektionsfläche 2 dargestellt wird, wodurch das Abbild des Himmels auf der virtuellen Projektionsfläche 2 an den tatsächlichen Himmel angenähert wird.

Optional kann zusätzliche Bildinformation entsprechend einer aktuellen Wetterlage gewählt werden. Dabei werden bspw. bei einer regnerischen Wetterlage mehr Wolken in dem künstlichen Himmel dargestellt, als bei einer guten Wetterlage. Entsprechend können Regen- oder Gewitterwolken bei entsprechender Wetterlage dargestellt werden.

Zudem kann die zusätzliche Bildinformation entsprechend aktueller Lichtverhältnisse gewählt werden. Eine Angabe über die aktuellen Lichtverhältnisse in dem tatsächlichen Fahrzeugumfeld kann dabei bspw. von einem Lichtsensor des Fahrzeuges bereitgestellt werden. Eine Helligkeit des dargestellten künstlichen Himmels kann an die aktuellen Lichtverhältnisse angepasst werden.

Insbesondere werden in dem künstlichen Himmel auch Himmelskörper dargestellt. Die aktuelle Tageszeit und das aktuelle Datum werden genutzt, um die Lage von Himmelskörpern (bspw. Sonne, Mond, Sterne, Milchstraße) gegenüber dem Fahrzeug 1 zu ermitteln und in dem künstlichen Himmel darzustellen. Dabei kann bspw. auch eine Mondphase, ein Erdschein, Schattenwürfe und/oder Sonnen- und Mondfinsternisse berechnet und in den künstlichen Himmel eingefügt werden.

Zusätzlich zu dem künstlichen Himmel kann ebenfalls eine Wettervorhersage in dem zweiten Bereich 5 dargestellt werden. So können bspw. Symbole, insbesondere dreidimensionale Symbole auf der virtuellen Projektionsfläche 2 abgebildet werden, und die Wettervorhersage somit in die Umgebungsdarstellung des Fahrzeuges eingebettet werden. Diese Symbole könnten bspw. Wolken-, Regen-, Schnee- und/oder Windanimationen sein. Auch jedes andere Wetter kann auf diese Weise symbolisiert werden. Ein Symbol wird dabei als dreidimensional bezeichnet, wenn dieses sich derart über die virtuelle Projektionsfläche 2 erstreckt, dass dieses aus Sicht einer virtuellen Kamera 7 den Anschein einer dreidimensionalen Form aufweist.

Zusätzlich können Textelemente in dem zweiten Bereich 5 dargestellt werden. So können bspw. Wolken-, Sonnen- oder Temperaturinformationen in die Fahrzeugumgebung eingebettet werden. Diese Textelemente können bspw. die durch Symbole dargestellte Wettervorhersage präzisieren. Jedoch kann auch jede andere Information durch diese Textelemente bereitgestellt werden. Insbesondere seien dabei Verkehrsinformationen und Betriebsinformationen bezüglich des Fahrzeuges 1, wie zum Beispiel dessen Geschwindigkeit oder Informationen eines Regensensors, genannt. Auch können insbesondere durchlaufende Texte dargestellt werden.

Allgemein können dabei auch Informationen einbezogen werden, die über eine mobile Internet-Schnittstelle bereitgestellt werden. So kann beispielsweise die Wettervorhersage oder die aktuelle Wetterlage über diese Internet-Schnittstelle bezogen werden.

Insbesondere wenn ein Himmel in dem zweiten Bereich 5 dargestellt wird, wird ein Übergang zwischen dem ersten Bereich 4 und dem zweiten Bereich 5 erzeugt, also ein Übergang zwischen den aus Kamerabildern erzeugten Texturen des ersten Bereiches 4 und den aus den zusätzlichen Bildinformationen gebildeten Texturen des zweiten Bereiches 5 erzeugt. Dazu wird im Bereich des Übergangs zwischen dem ersten Bereich 4 und dem zweiten Bereich 5 auf die virtuelle Projektionsfläche 2 ein Horizontband gelegt, welches einen grafischen Übergang abbildet. So ist das Horizontband beispielsweise eine Überblendung zwischen den Texturen des ersten Bereiches 4 und den Texturen des zweiten Bereiches 5.

Es ist ersichtlich, dass alle zuvor beschriebenen zusätzlichen Bildinformationen unabhängig voneinander dargestellt werden können. Somit ist auch eine beliebige Kombination der genannten Beispiele möglich. Insbesondere ist es dabei auch möglich, die ausgewählte zusätzliche Bildinformation von einer Position des Fahrzeuges 1 abhängig zu machen. So könnte bspw. ein künstlicher Himmel dargestellt werden, wenn eine Position des Fahrzeuges 1 verfügbar ist, und es könnte eine Wettervorhersage dargestellt werden, wenn keine Position des Fahrzeuges 1 verfügbar ist, was typischerweise dann der Fall ist, wenn sich das Fahrzeug 1 in einem geschlossenen Raum befindet.

Nach dem vierten Schritt wird ein fünfter Schritt ausgeführt. In dem fünften Schritt erfolgt ein Darstellen des Fahrzeugumfeldes aus Sicht der virtuellen Kamera 7, die in dem virtuellen Raum 3 angeordnet ist. Dazu wird ein Abbild der virtuellen Projektionsfläche 2 aus Sicht der virtuellen Kamera 7 errechnet. Abhängig von der Lage und einer Ausrichtung der virtuellen Kamera 7 ist der zweite Bereich 5 in einem Bild der virtuellen Kamera 7, also aus Sicht der virtuellen Kamera 7, sichtbar. Das Bild der virtuellen Kamera 7 wird auf einem Bildschirm 16 im Innenraum des Fahrzeuges 1 dargestellt.

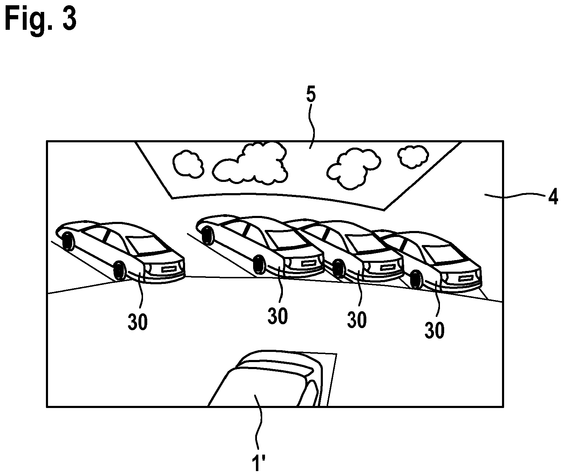

Figur 3 zeigt ein beispielhaftes Abbild des Fahrzeugumfeldes aus Sicht der virtuellen Kamera 7. Es ist ersichtlich, dass in einigen Bereichen der Darstellung der erste Bereich 4 im Blickfeld der virtuellen Kamera 7 liegt. In diesem ersten Bereich 4 ist das Fahrzeugumfeld des Fahrzeuges 1 dargestellt, in dem sich in dem gezeigten Beispiel mehrere Fahrzeuge 30 befinden. Ferner ist ersichtlich, dass über dem Modell 1' des Fahrzeuges 1 der zweite Bereich 5 abgebildet ist. Dieser ist in dem in Figur 3 gezeigten Beispiel mit einem wolkigen Himmel gefüllt, der durch die zusätzliche Bildinformation definiert ist.

Allgemein wird also eine virtuellen Projektionsfläche 2, welche ansonsten typischerweise in Form einer nach oben offenen Schüssel ausgeführt ist, in Form einer oben geschlossenen Form, insbesondere der Form einer Kugel, ausgeführt. Somit ist ein oberer Teil der virtuellen Projektionsfläche 2 ebenfalls in Form eines 3D-Netzes verfügbar. Der zugehörige Teil der Fahrzeugumgebung wird von keiner der an dem Fahrzeug 1 angeordneten Kameras 12 bis 15 erfasst. Somit liegt für diesen Bereich der virtuellen Projektionsfläche 2 keine Texturinformation bereit, da der Himmel über dem Fahrzeug 1 von keiner Kamera des Fahrzeuges 1 erfasst wird. Der entsprechende Bereich ohne Texturinformation kann auf einfache Weise mittels eines Sichtbarkeitsalgorithmus erkannt werden, welcher prüft, ob einem Polygon der virtuellen Projektionsfläche 2 eine Textur zugeordnet wird.

Es ist insbesondere ersichtlich, dass ein Himmel, welcher in dem zweiten Bereich 5 abgebildet wird, nicht zwingend einem tatsächlichen Himmel über dem Fahrzeug entspricht. Dadurch ergibt sich die Möglichkeit, darin auch eine zukünftige Wetterlage darzustellen und somit dem Fahrer des Fahrzeuges 1 anzuzeigen.

## Patentansprüche

1. Verfahren zum Darstellen eines Fahrzeugumfeldes eines Fahrzeuges (1) umfassend:
- ein Erfassen eines Teilbereiches des Fahrzeugumfeldes in zumindest einem Kamerabild,
- ein Bereitstellen einer virtuellen Projektionsfläche (2) in einem virtuellen Raum (3), welcher die tatsächliche Fahrzeugumgebung repräsentiert,
- ein Übertragen des zumindest einen Kamerabildes auf einen ersten Bereich (4) der virtuelle Projektionsfläche (2), wobei das zumindest eine Kamerabild entsprechend einer Lage des darin abgebildeten Fahrzeugumfeldes auf der virtuellen Projektionsfläche (2) angeordnet wird,
- ein Übertragen einer rechnerisch erzeugten und/oder vorab gespeicherten zusätzlichen Bildinformation auf einen zweiten Bereich (5) der virtuellen Projektionsfläche (2) und
- ein Darstellen des Fahrzeugumfeldes aus Sicht einer virtuellen Kamera (7), die in dem virtuellen Raum angeordnet ist,
**dadurch gekennzeichnet, dass**
sich der zweite Bereich (5) entlang einer Hochachse (6) des Fahrzeuges (1) oberhalb des ersten Bereiches erstreckt,
wobei die zusätzliche Bildinformation einen Himmel darstellt.

2. Verfahren nach Anspruch 1, **dadurch gekennzeichnet, dass** die virtuelle Projektionsfläche (2) eine Position des Fahrzeuges (1) in dem virtuellen Raum (3) vollständig umschließt.

3. Verfahren nach einem der vorhergehenden Ansprüche, **dadurch gekennzeichnet, dass** die zusätzliche Bildinformation entsprechend einer aktuellen Tageszeit und/ oder einem aktuellen Datum gewählt wird.

4. Verfahren nach einem der vorhergehenden Ansprüche, **dadurch gekennzeichnet, dass** die zusätzliche Bildinformation entsprechend einer Position des Fahrzeuges gewählt wird.

5. Verfahren nach einem der vorhergehenden Ansprüche, **dadurch gekennzeichnet, dass** die zusätzliche Bildinformation entsprechend einer aktuellen Wetterlage gewählt wird.

6. Verfahren nach einem der vorhergehenden Ansprüche, **dadurch gekennzeichnet, dass** die zusätzliche Bildinformation entsprechend aktueller Lichtverhältnisse gewählt wird.

7. Verfahren nach einem der vorhergehenden Ansprüche, **dadurch gekennzeichnet, dass** die zusätzliche Bildinformation Informationen über eine aktuelle oder zukünftige Wetterlage umfasst.

8. Verfahren nach einem der vorhergehenden Ansprüche, **dadurch gekennzeichnet, dass** die zusätzliche Bildinformation ein Textelement oder Symbol umfasst.

9. Vorrichtung (11) zum Darstellen eines Fahrzeugumfeldes eines Fahrzeuges (1), die dazu eingerichtet ist, das Verfahren nach einem der Ansprüche 1 bis 8 auszuführen.

## Claims

1. Method for presenting a vehicle vicinity of a vehicle (1), comprising:
- capturing a partial region of the vehicle vicinity in at least one camera image,
- providing a virtual projection surface (2) in a virtual space (3) that represents the actual vehicle environment,
- transmitting the at least one camera image to a first region (4) of the virtual projection surface (2), wherein the at least one camera image is arranged on the virtual projection surface (2) corresponding to a location of the vehicle vicinity imaged thereon,
- transmitting an additional piece of image information that is generated by way of a computer and/or is stored in advance to a second region (5) of the virtual projection surface (2), and
- presenting the vehicle vicinity from the view of a virtual camera (7) arranged in the virtual space, **characterized in that**
the second region (5) extends along a vertical axis (6) of the vehicle (1) above the first region,
wherein the additional piece of image information presents a sky.

2. Method according to Claim 1, **characterized in that** the virtual projection surface (2) completely encloses a position of the vehicle (1) in the virtual space (3).

3. Method according to either of the preceding claims, **characterized in that** the additional piece of image information is selected in accordance with a current time of day and/or a current date.

4. Method according to one of the preceding claims, **characterized in that** the additional piece of image information is selected in accordance with a position of the vehicle.

5. Method according to one of the preceding claims, **characterized in that** the additional piece of image information is selected in accordance with a current weather condition.

6. Method according to one of the preceding claims, **characterized in that** the additional piece of image information is selected in accordance with current light conditions.

7. Method according to one of the preceding claims, **characterized in that** the additional piece of image information comprises information relating to a current or future weather condition.

8. Method according to one of the preceding claims, **characterized in that** the additional piece of image information comprises a text element or a symbol.

9. Apparatus (11) for presenting a vehicle vicinity of a vehicle (1), designed for carrying out the method according to one of Claims 1 to 8.

## Revendications

1. Procédé de représentation de l'environnement d'un véhicule (1), comprenant :
- l'acquisition d'une zone partielle de l'environnement du véhicule dans au moins une image de caméra,
- la production d'une surface de projection virtuelle (2) dans un espace virtuel (3) qui représente l'environnement réel du véhicule,
- la transmission de ladite au moins une image de caméra sur une première zone (4) de la surface de projection virtuelle (2), dans lequel ladite au moins une image de caméra est disposée sur la surface de projection virtuelle (2) en correspondance avec une position de l'environnement du véhicule dont l'image y est formée,
- la transmission d'une information d'image supplémentaire générée par calcul et/ou préalablement mémorisée sur une deuxième zone (5) de la surface de projection virtuelle (2) et
- la représentation de l'environnement du véhicule vu depuis une caméra virtuelle (7) disposée dans l'espace virtuel,
**caractérisé en ce que**
la deuxième zone (5) s'étend le long d'un axe vertical (6) du véhicule (1) au-dessus de la première zone,
dans lequel l'information d'image supplémentaire représente un ciel.

2. Procédé selon la revendication 1, **caractérisé en ce que** la surface de projection virtuelle (2) entoure entièrement une position du véhicule (1) dans l'espace virtuel (3).

3. Procédé selon l'une des revendications précédentes, **caractérisé en ce que** l'information d'image supplémentaire est sélectionnée en correspondance avec une heure du jour actuelle et/ou une date actuelle.

4. Procédé selon l'une des revendications précédentes, **caractérisé en ce que** l'information d'image supplémentaire est sélectionnée en correspondance avec une position du véhicule.

5. Procédé selon l'une des revendications précédentes, **caractérisé en ce que** l'information d'image supplémentaire est sélectionnée en correspondance avec une situation météorologique actuelle.

6. Procédé selon l'une des revendications précédentes, **caractérisé en ce que** l'information d'image supplémentaire est sélectionnée en correspondance avec des conditions d'éclairage actuelles.

7. Procédé selon l'une des revendications précédentes, **caractérisé en ce que** l'information d'image supplémentaire comprend des informations concernant une situation météorologique actuelle ou future.

8. Procédé selon l'une des revendications précédentes, **caractérisé en ce que** l'information d'image supplémentaire comprend un élément de texte ou un symbole.

9. Dispositif (11) de représentation de l'environnement d'un véhicule (1), qui est conçu pour mettre en œuvre le procédé selon l'une des revendications 1 à 8.
